# EUROPÄISCHE PATENTSCHRIFT

(11) **EP 3 482 372 B1**
(45) Veröffentlichungstag und Bekanntmachung des Hinweises auf die Patenterteilung: **05.05.2021**
(21) Anmeldenummer: 17727485.9
(22) Anmeldetag: 24.05.2017
(51) Int. Cl.: G07C 5/00, H04L 29/06

(54) **SYSTEM UND VERFAHREN ZUM ÜBERSENDEN VON DATEN AUS EINEM DRAHTLOSEN NETZWERK EINES FAHRZEUGS**
SYSTEM AND METHOD FOR TRANSMITTING DATA FROM A WIRELESS NETWORK OF A VEHICLE
SYSTÈME ET PROCÉDÉ DE FIN DE DONNÉES D'UN RÉSEAU SANS FIL D'UN VÉHICULE

(30) Priorität: 06.07.2016 DE 102016008212
(43) Veröffentlichungstag der Anmeldung: 15.05.2019
(73) Patentinhaber: WABCO Europe BVBA, 1170 Brussels (BE)
(72) Erfinder: GLAVINIC, Andelko, 31157 Sarstedt (DE); LAUDE, Ulf, 29313 Hambühren (DE); RISSE, Rainer, 30982 Pattensen-Reden (DE); STENDER, Axel, 31787 Hameln (DE); WITTE, Norbert, 31867 Lauenau (DE)
(74) Vertreter: Koschnitzki, Thomas
(86) Internationale Anmeldenummer: PCT/EP2017/000619
(87) Internationale Veröffentlichungsnummer: WO 2018/006989

(56) Entgegenhaltungen:
- DE-A1-102013 208 130
- US-A1- 2005 240 343
- US-A1- 2014 067 152

## Beschreibung

Die Erfindung betrifft ein System zum Übersenden von Daten aus einem drahtlosen Netzwerk eines Fahrzeugs. Außerdem betrifft die Erfindung ein entsprechendes Verfahren sowie ein Computerprogramm zur Durchführung des Verfahrens.

Moderne Fahrzeuge weisen elektronische Systeme auf, insbesondere zur Überwachung von Funktionen und Zuständen und/oder zur Steuerung. Die dabei anfallenden Daten sind nicht nur für einen Fahrzeugführer, sondern auch für externe Benutzer von Interesse, etwa für die Organisation von Fahrzeugflotten, für die Überwachung der Fahrzeuge, die Vorbereitung von Wartungsaufenthalten usw.

Fahrzeugführer weisen oftmals ein mobiles Gerät zur Kommunikation auf, etwa ein Mobiltelefon, Smartphone, Notepad, Notebook oder dergleichen. Bekannt ist die Kommunikation eines derartigen mobilen Gerätes über ein lokales Funknetz nach dem WLAN-Standard IEEE-802.11 mit einem hierfür vorgesehenen WLAN-Modul eines Anhängers, siehe DE 10 2014 010 752 A1. Das WLAN-Modul ist dort mit einem Bremsensteuergerät eines elektronischen Bremssystems verbunden. Das Bremsensteuergerät empfängt Daten von Sensoren und/oder weiteren im Fahrzeug vorhandenen Steuergeräten.

Eine Kommunikation zwischen einem Fahrzeug und einem mobilen Kundenendgerät ist in der DE 10 2013 208 130 A1 offenbart. Tritt am Fahrzeug ein Fehler auf, kann der Fahrer mit seinem Kundenendgerät per WLAN eine Kommunikationsvorrichtung im Fahrzeug kontaktieren und Daten auslesen. Die ausgelesenen Daten können über ein Mobilfunknetz an einem zentralen Server übermittelt werden.

In der US 2014/0067152 A1 ist ein Fahrzeug mit Telematikeinrichtung offenbart, von dem aus Daten an ein Smartphone und von dort an eine Teilnehmerstation eines Mobilfunknetzes übertragen werden.

Bei den Daten handelt es sich beispielsweise um weitgehend unveränderliche Daten wie Fahrzeugkennzeichen, Typ, Eigentümer sowie dynamische Daten wie Abfahrtsort, Fahrtzeit, Durchschnittsgeschwindigkeit, Druck im Bremssystem, Achslast, Eigenschaften der Ladung, Profil der letzten Strecke, Kilometerstand, Zielort.

Von besonderem Interesse ist die Übergabe von Daten aus dem Fahrzeug bei Erreichen des Zielorts oder bei einem Zwischenhalt. Typischerweise sollen Daten an einen über das Internet erreichbaren Empfänger weitergeleitet werden. Die Weiterleitung der Daten soll möglichst einfach und automatisiert durchgeführt werden. Zugleich ist ein hohes Maß an Sicherheit einzuhalten. Am Zielort oder an einem Zwischenhalt ist wenigstens ein drahtloses Netzwerk vorhanden. Daneben können weitere drahtlose Netzwerke bestehen. Die Daten sollen vom Fahrzeug automatisiert und sicher an eines der drahtlosen Netzwerke übertragen werden.

Zur Lösung der Aufgabe ist ein System mit den Merkmalen des Anspruchs 1 vorgesehen, nämlich insbesondere wie folgt:
Mit einer ersten Station zum Aufspannen eines durch Verschlüsselung gesicherten ersten drahtlosen Netzwerks, einer zweiten Station zum Aufspannen eines zweiten drahtlosen Netzwerks, und einem mobilen Gerät zur Verbindung mit den drahtlosen Netzwerken,
wobei die erste Station im Fahrzeug vorgesehen ist, wobei im mobilen Gerät Zugangsdaten zur Verbindung mit den beiden drahtlosen Netzwerken vorhanden sind,
wobei im Fahrzeug Daten vorhanden sind, welche von der ersten Station zum mobilen Gerät und von dort zur zweiten Station übertragen werden.

Das mobile Gerät wird vom Fahrzeugführer und/oder im Fahrzeug mitgeführt und ist vorzugsweise mit der im Fahrzeug vorhandenen ersten Station verbunden. Die erforderlichen Zugangsdaten für die Verbindung zur ersten Station liegen im mobilen Gerät vor, wurden beispielsweise vom Fahrzeugführer zuvor in das mobile Gerät eingegeben oder von anderer Stelle als Datensatz auf das mobile Gerät übertragen, etwa als E-Mail oder SMS. Außerdem sind im mobilen Gerät die Zugangsdaten der zweiten Station abgelegt. Dadurch kann das mobile Gerät über die erste Station Daten aus dem Fahrzeug abrufen, sich mit dem drahtlosen Netzwerk der zweiten Station verbinden und dorthin die Daten übertragen. Der Vorgang kann automatisiert ablaufen, nämlich durch geeignete Software auf dem mobilen Gerät.

Nach einem weiteren Gedanken der Erfindung ist vorgesehen, dass das mobile Gerät die zweite Station mit dem drahtlosen Netzwerk erkennt und erst danach die Daten aus dem Fahrzeug über die erste Station zum mobilen Gerät und von dort zur zweiten Station übertragen werden. Dadurch ist sichergestellt, dass die Daten bei Übertragung zur zweiten Station aktuell sind.

Nach einem weiteren Gedanken der Erfindung ist vorgesehen, dass das mobile Gerät mit dem Netzwerk der ersten Station verbunden ist, dass das mobile Gerät nach dem Erkennen des Netzwerks der zweiten Station und vor dem Verbinden mit dem Netzwerk der zweiten Station die Verbindung zur ersten Station trennt, und dass das mobile Gerät nach dem Übertragen der Daten an die zweite Station die Verbindung zur ersten Station wiederherstellt. Entsprechend wird vor der Wiederherstellung der Verbindung zur ersten Station die Verbindung zur zweiten Station getrennt.

Nach einem weiteren Gedanken der Erfindung ist vorgesehen, dass das mobile Gerät die Daten über die zweite Station an einen mit dem Netzwerk verbundenen Computer überträgt, insbesondere einen Webserver. Der Computer steht vorzugsweise unter der Kontrolle eines externen Benutzers, der die Daten für seine Zwecke benötigt.

Nach einem weiteren Gedanken der Erfindung handelt es sich bei dem drahtlosen Netzwerk der ersten Station und/oder der zweiten Station um ein WLAN. Die Technologie hierfür ist bekannt und erprobt, siehe Standard IEEE-802.11.

Vorzugsweise ist das mobile Gerät WLAN-fähig, insbesondere ein Mobiltelefon mit WLAN-Modul. Die beiden Stationen der drahtlosen Netzwerke werden als Accesspoints betrieben, während das mobile Gerät sich jeweils als Client in die Netzwerke einwählt. Die Netzwerke sind jeweils verschlüsselt, so dass ohne Zugangsdaten, welche auf dem mobilen Gerät vorhanden sind, ein Zugang nicht möglich ist. Ein aktiver WLAN-Client, auch ein mit einem Accesspoint verbundener WLAN-Client, prüft standardgemäß kontinuierlich, ob weitere WLAN-Stationen vorhanden sind und angewählt werden können.

Nach einem weiteren Gedanken der Erfindung handelt es sich bei dem mobilen Gerät um ein Smartphone, mit einer App zur Steuerung des Systems oder einzelner Schritte innerhalb des Systems. Apps sind Programme, die auf einem Smartphone installiert sind und verschiedenste Funktionen ausführen können, in diesem Fall die Steuerung des Systems. Dazu gehört auch die Fähigkeit bzw. die Möglichkeit des Smartphones das Vorhandensein bekannter drahtloser Netzwerke zu erkennen. Sobald ein drahtloses Netzwerk erkannt wird, etwa bei Erreichen eines Zielortes, wird dieses Netzwerk bzw. deren Station mit den auf dem mobilen Gerät vorhandenen Zugangsdaten angewählt und die vom Fahrzeug übernommenen Daten werden übertragen.

Nach einem weiteren Gedanken der Erfindung handelt es sich bei dem Fahrzeug um ein Anhängefahrzeug insbesondere mit elektronischem Bremssystem. Letzteres kann einer pneumatischen Bremsanlage zugeordnet sein. Grundsätzlich ist das erfindungsgemäße System für alle Arten von Fahrzeugen vorgesehen, zu Lande, zu Luft und im Wasser. Bevorzugt werden Landfahrzeuge/Nutzfahrzeuge.

Nach einem weiteren Gedanken der Erfindung ist die erste Station ein WLAN-Modul, welches mit einem elektronischen System des Fahrzeugs verbunden ist, etwa mit der elektronischen Steuereinheit eines elektronischen Bremssystems. Die elektronische Steuereinheit kann mit Sensoren und/oder weiteren Steuergeräten verbunden sein, über analoge Leitungen und/oder über Datenleitungen.

Ein erfindungsgemäßes Verfahren zum Übersenden von Daten aus einem ersten drahtlosen Netzwerk eines Fahrzeugs an ein zweites drahtloses Netzwerk mittels eines mobilen Gerätes weist die Merkmale des Anspruchs 11 auf. Im mobilen Gerät sind Zugangsdaten für die beiden drahtlosen Netzwerke vorhanden. Folgende Schritte werden ausgeführt:
a) das mobile Gerät ist mit dem ersten drahtlosen Netzwerk des Fahrzeugs verbunden und prüft, ob bekannte weitere Netzwerke vorhanden sind,
b) nach dem Erkennen des zweiten drahtlosen Netzwerks ruft das mobile Gerät die Daten aus dem Fahrzeug über das erste drahtlose Netzwerk ab, verbindet sich mit dem zweiten drahtlosen Netzwerk und übersendet die Daten an das Netzwerk.

Das Verfahren läuft über eine Software im mobilen Gerät programmgesteuert automatisch ab und ermöglicht eine sichere Übertragung der Daten aus dem Fahrzeug an das zweite Netzwerk bzw. an einen mit dem zweiten Netzwerk verbunden Empfänger.

Nach einem weiteren Gedanken der Erfindung verbindet sich das mobile Gerät nach einem Verlassen des zweiten Netzwerks wieder mit dem ersten Netzwerk. Dadurch ist stets ein neuerlicher Datenabruf aus dem Fahrzeug möglich.

Nach einem weiteren Gedanken der Erfindung wiederholt das mobile Gerät Schritt b) (aus Anspruch 11) nach Ablauf einer definierten Zeitspanne und solange die Verbindung zum zweiten Netzwerk besteht oder möglich ist. Solange das Fahrzeug an einem Ort bleibt, ist auch die Verbindung zum zweiten Netzwerk möglich. In dieser Zeit können wiederholt Daten übertragen werden, sodass stets aktuelle Daten des Fahrzeugs auch im zweiten Netzwerk vorliegen.

Auch im Hinblick auf das erfindungsgemäße Verfahren ist insbesondere vorgesehen, dass das drahtlose Netzwerk der ersten Station und/oder der zweiten Station ein WLAN ist. Auch kann das mobile Gerät WLAN-fähig sein, insbesondere ein Mobiltelefon mit WLAN-Modul. Vorzugsweise ist das mobile Gerät ein Smartphone, mit einer App zur Steuerung des Systems oder einzelner Schritte innerhalb des Systems. Bei dem Fahrzeug handelt es sich vorzugsweise um ein Anhängefahrzeug, insbesondere mit elektronischem Bremssystem.

Erfindungsgemäß ist zur Durchführung des Verfahrens ein Computerprogramm, ein Computerprogrammprodukt oder eine App vorgesehen. Das Programm ist auf dem mobilen Gerät installiert und steuert die Verfahrensschritte.

Weitere Merkmale der Erfindung ergeben sich aus der Beschreibung im Übrigen und aus den Ansprüchen. Vorteilhafte Ausführungsformen der Erfindung werden nachfolgend anhand von Figuren näher erläutert. Es zeigen:
- Figur 1: eine Skizze zur Darstellung eines erfindungsgemäßen Systems bzw. eines Verfahrens,
- Figur 2: die Abfolge einzelner Schritte bei der Durchführung des Verfahrens.

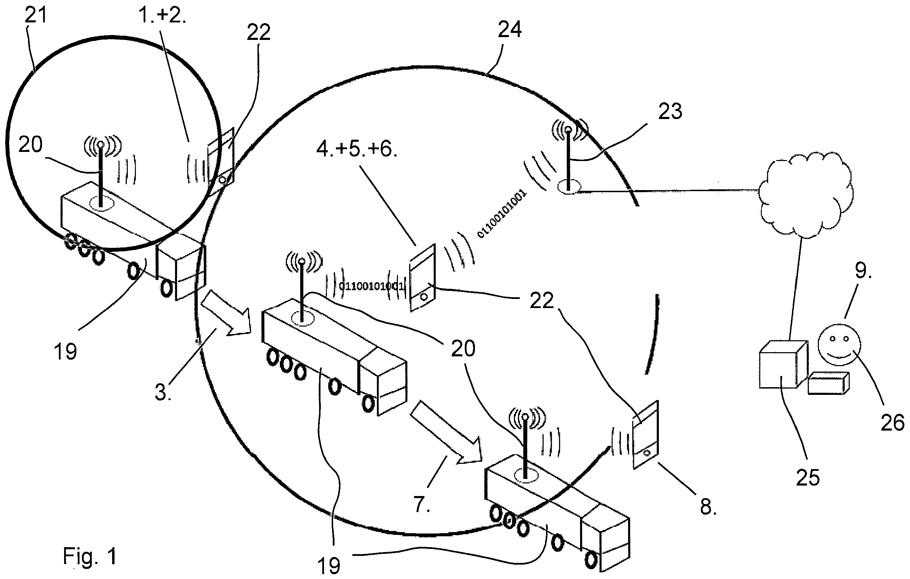

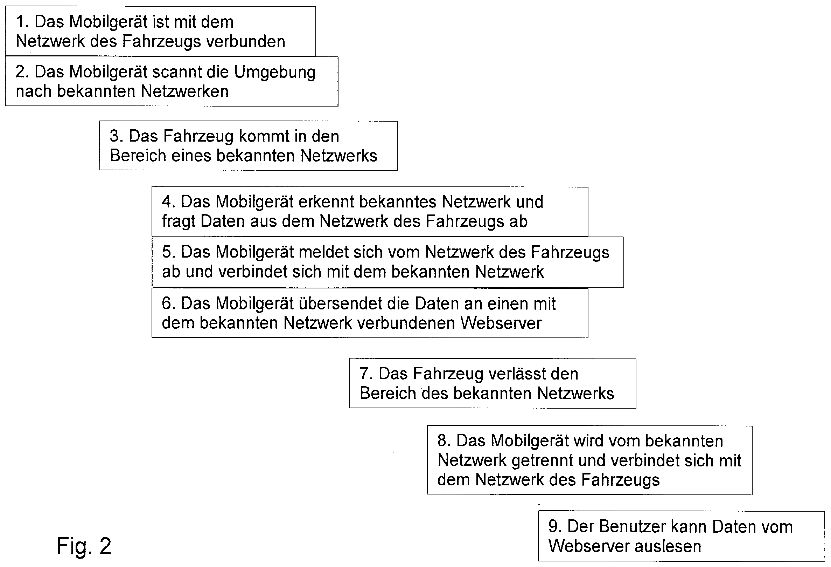

Das erfindungsgemäße Verfahren besteht in diesem Ausführungsbeispiel aus im Wesentlichen neun Schritten, die in Figur 1 anhand der Ziffern 1. bis 9. dargestellt sind. Zugleich ist die Abfolge der einzelnen Schritte in Figur 2 erläutert.

Ein System weist im vorliegenden Ausführungsbeispiel folgende Bestandteile auf:
Ein Fahrzeug 19 ist hier ein Lastzug aus Anhänger und Motorwagen ist. Bei dem Anhänger handelt es sich um einen Auflieger. Im Fahrzeug 19 ist ein WLAN-Modul mit einer ersten Station 20 zum Aufspannen eines ersten drahtlosen Netzwerks 21 vorgesehen. Die erste Station 20 ist somit Bestandteil des Fahrzeugs 19, insbesondere des Anhängers.

Ein mobiles Gerät 22 ist hier ein Smartphone und wird von einem nicht gezeigten Fahrer auf dem Fahrzeug 19 mitgeführt.

Eine stationäre zweite Station 23 spannt ein zweites drahtloses Netzwerk 24 (WLAN) auf. Mit dem zweiten Netzwerk 24 ist über das Internet ein Webserver 25 verbunden. Ein externer Benutzer 26 kann auf den Webserver 25 zugreifen.

Das mobile Gerät 22 ist WLAN-fähig und mit der ersten Station 20 im Fahrzeug 19 verbunden (siehe 1. in Fig. 1). Dabei befindet sich die erste Station 20 in einem Modus als Accesspoint, während das mobile Gerät 22 ein Client ist. Zugleich scannt das mobile Gerät 22 seine Umgebung nach bekannten Netzwerken. Hierzu sind im mobilen Gerät 22 die Daten interessierender Netzwerke abgelegt, beispielweise die Daten eines Netzwerks am nächsten Halt des Fahrzeugs 19.

Auf seiner Fahrt kommt das Fahrzeug 19 in den Bereich des zweiten Netzwerks 24, (siehe 3. in Fig. 1). Das mobile Gerät 22 erkennt das zweite Netzwerk 24 und fragt über die erste Station 20 Daten aus dem Fahrzeug 19 ab und speichert die Daten. Vorzugsweise handelt es sich um Daten, die in einem mit der ersten Station verbundenen, nicht gezeigten elektronischen Steuergerät vorliegen. Anschließend baut das mobile Gerät 22 eine Verbindung zum zweiten Netzwerk 24 auf und übersendet die gespeicherten Daten an das zweite Netzwerk 24 bzw. an den Webserver 25 (siehe 6.).

Während sich das Fahrzeug 19 im zweiten Netzwerk 24 befindet, werden die Daten nur einmal zur zweiten Station 23 übertragen oder aber mehrfach, etwa zeitgesteuert. Hierzu kann das mobile Gerät 22 kurzzeitig eine Verbindung mit der ersten Station 20 herstellen um die Daten zu aktualisieren und anschließend an die zweite Station 23 zu übertragen.

Sobald das Fahrzeug 19 das zweite Netzwerk 24 verlässt (siehe 7.) wird die Verbindung vom mobilen Gerät 22 zur zweiten Station 23 unterbrochen und das mobile Gerät verbindet sich wieder mit der ersten Station 20 des ersten Netzwerks 21 im Fahrzeug 19 (siehe 8.).

Der externe Benutzer 26 kann die auf dem Webserver 25 gespeicherten Daten auslesen bzw. abfragen. Bei dem externen Benutzer 26 handelt es sich beispielweise um den Mitarbeiter einer organisatorischen Einheit zur Routenplanung, zum Flottenmanagement und/oder zur Wartung der Fahrzeuge. Auch kann es sich um einen Kunden handeln, dem die Möglichkeit zur Sendungsverfolgung eingeräumt wurde oder um die Finanzverwaltung eines Landes.

Der automatische Ablauf des Verfahrens wird durch eine auf dem mobilen Gerät 22 installierte Software gesteuert. Vorzugsweise handelt es sich um eine sogenannte App auf einem Smartphone. Bestandteile der Software sind insbesondere Schritte zum Verbinden mit der ersten Station 20, das Scannen und Erkennen weiterer Netzwerke, das Abfragen von Daten mittels der ersten Station 20, das Abspeichern und Bereithalten der Daten, das Abspeichern und Bereithalten von Zugangsdaten von Netzwerken, das Verbinden mit der zweiten Station 23 nach Erkennen derselben, das Übertragen der Daten aus dem mobilen Gerät 22 zur zweiten Station 23 bzw. an eine zuvor gespeicherte Adresse eines Webservers 25, das Verbinden mit der ersten Station 20 nach dem Abriss der Verbindung zur zweiten Station 23.

## Patentansprüche

1. System zum Übersenden von Daten aus einem drahtlosen Netzwerk eines Fahrzeugs (19), mit einer ersten Station (20) zum Aufspannen eines durch Verschlüsselung gesicherten ersten drahtlosen Netzwerks (21), einer zweiten Station (23) zum Aufspannen eines zweiten drahtlosen Netzwerks (24) und einem mobilen Gerät (22) zur Verbindung mit den drahtlosen Netzwerken (21 , 24), wobei die erste Station (20) im Fahrzeug (19) vorgesehen ist,
wobei im mobilen Gerät (22) Zugangsdaten zur Verbindung mit den beiden drahtlosen Netzwerken (21 , 24) vorhanden sind,
und wobei im Fahrzeug (19) Daten vorhanden sind, welche von der ersten Station ( 20) zum mobilen Gerät (22) und von dort zur zweiten Station (23) übertragen werden, **dadurch gekennzeichnet, dass** das mobile Gerät (22) die zweite Station ( 23) mit dem drahtlosen Netzwerk (24) erkennt und erst danach die Daten aus dem Fahrzeug (19) über die erste Station (20) zum mobilen Gerät (22) und von dort zur zweiten Station (23) übertragen werden.

2. System nach Anspruch 1, **dadurch gekennzeichnet, dass** das mobile Gerät (22) die Daten über die zweite Station (23) an einen mit dem Netzwerk (24) verbundenen Computer überträgt.

3. System nach Anspruch 1 oder 2, **dadurch gekennzeichnet, dass** das mobile Gerät (22) mit dem Netzwerk (21) der ersten Station (20) verbunden ist, dass das mobile Gerät (22) nach dem Erkennen des Netzwerks (24) der zweiten Station (23 ) und vor dem Verbinden mit dem Netzwerk (24) der zweiten Station (23) die Verbindung zur ersten Station (20) trennt, und dass das mobile Gerät (22) nach dem Übertragen der Daten an die zweite Station (23) die Verbindung zur ersten Station (20) wiederherstellt.

4. System nach Anspruch 1 oder einem der weiteren voranstehenden Ansprüche, **dadurch gekennzeichnet, dass** das mobile Gerät (22) die Daten über die zweite Station (23) an einen mit dem Netzwerk (24) verbundenen Computer überträgt, nämlich an einen Webserver (25).

5. System nach Anspruch 1 oder einem der weiteren voranstehenden Ansprüche, **dadurch gekennzeichnet, dass** das drahtlose Netzwerk (21) der ersten Station (20) ein WLAN ist.

6. System nach Anspruch 1 oder einem der weiteren voranstehenden Ansprüche, **dadurch gekennzeichnet, dass** das drahtlose Netzwerk (24) der zweiten Station (23 ) ein WLAN ist.

7. System nach Anspruch 1 oder einem der weiteren voranstehenden Ansprüche, **dadurch gekennzeichnet, dass** das mobile Gerät (22) WLAN-fähig ist, insbesondere ein Mobiltelefon mit WLAN-Modul.

8. System nach Anspruch 1 oder einem der weiteren voranstehenden Ansprüche, **dadurch gekennzeichnet, dass** das mobile Gerät (22) ein Smartphone ist, mit App zur Steuerung des Systems oder einzelne Schritte innerhalb des Systems.

9. System nach Anspruch 1 oder einem der weiteren voranstehenden Ansprüche, **dadurch gekennzeichnet, dass** das Fahrzeug (19) ein Anhängefahrzeug ist oder ein Anhängefahrzeug mit elektronischem Bremssystem.

10. System nach Anspruch 1 oder einem der weiteren voranstehenden Ansprüche, **dadurch gekennzeichnet, dass** die erste Station (20) ein WLAN-Modul ist, welches mit einem elektronischen System oder einem elektronischen Steuergerät des Fahrzeugs (19) verbunden ist.

11. Verfahren zum Übersenden von Daten aus einem ersten drahtlosen Netzwerk ( 21) eines Fahrzeugs (19) an ein zweites drahtloses Netzwerk (24) mittels eines mobilen Gerätes (22), wobei im mobilen Gerät (22) Zugangsdaten für die beiden drahtlosen Netzwerke (21, 24) vorliegen, mit folgenden Schritten:
a) das mobile Gerät (22) ist mit dem ersten drahtlosen Netzwerk (21) des Fahrzeugs (19) verbunden und prüft, ob bekannte weitere Netzwerke vorhanden sind,
b) erst nach dem Erkennen des zweiten drahtlosen Netzwerks (24) ruft das mobile Gerät (22) die Daten aus dem Fahrzeug (19) über das erste drahtlose Netzwerk (21) ab, verbindet sich mit dem zweiten drahtlosen Netzwerk (24) und übersendet die Daten an das zweite Netzwerk (24).

12. Verfahren nach Anspruch 11, **dadurch gekennzeichnet, dass** sich das mobile Gerät (22) vor dem Verbinden mit dem zweiten Netzwerk (24) vom ersten Netzwerk (21) trennt, und dass sich das mobile Gerät (22) nach einem Verlassen des zweiten Netzwerks (24) wieder mit dem ersten Netzwerk (21) verbindet.

13. Verfahren nach Anspruch 11 oder 12, **dadurch gekennzeichnet, dass** nach Ablauf einer definierten Zeitspanne und solange eine Verbindung zum zweiten Netzwerk ( 24) besteht oder möglich ist, Schritt b) aus Anspruch 11 wiederholt wird.

14. Verfahren nach Anspruch 11 oder einem der weiteren voranstehenden Ansprüche, **dadurch gekennzeichnet, dass** das drahtlose Netzwerk (21) der ersten Station (20) ein WLAN ist.

15. Verfahren nach einem der Ansprüche 11 bis 14, **dadurch gekennzeichnet, dass** das drahtlose Netzwerk (24) der zweiten Station (23) ein WLAN ist.

16. Verfahren nach einem der Ansprüche 11 bis 15, **dadurch gekennzeichnet, dass** das mobile Gerät (22) WLAN-fähig oder ein Mobiltelefon mit WLAN-Modul ist.

17. Verfahren nach einem der Ansprüche 11 bis 16, **dadurch gekennzeichnet, dass** das mobile Gerät (22) ein Smartphone ist, mit einer App zur Steuerung des Verfahrens oder einzelner Schritte innerhalb des Verfahrens.

18. Verfahren nach einem der Ansprüche 11 bis 17, **dadurch gekennzeichnet, dass** das Fahrzeug (19) ein Anhängefahrzeug ist oder ein Anhängefahrzeug mit elektronischem Bremssystem.

19. Computerprogramm, Computerprogrammprodukt oder App zur Durchführung des Verfahrens nach einem der Ansprüche 11 bis 18.

## Claims

1. A system for transferring data from a wireless network of a vehicle (19), with a first station (20) for covering a first wireless network (21) secured by encryption, a second station (23) for covering a second wireless network (24) and a mobile device (22) for connecting to the wireless networks (21, 24), wherein the first station (20) is provided in the vehicle (19),
wherein access data for the connection to the two wireless networks (21, 24) are contained in the mobile device (22),
and wherein the vehicle (19) contains data which are transmitted from the first station (20) to the mobile device (22) and from there to the second station (23), **characterized in that** the mobile device (22) detects the second station (23) with the wireless network (24) and only then are the data transmitted from the vehicle (19) via the first station (20) to the mobile device (22) and from there to the second station (23) .

2. The system according to claim 1, **characterized in that** the mobile device (22) transmits the data via the second station (23) to a computer connected to the network (24).

3. The system according to claim 1 or 2, **characterized in that** the mobile device (22) is connected to the network (21) of the first station (20), that the mobile device (22) disconnects from the first station (20) after detecting the network (24) of the second station (23) and prior to connecting to the network (24) of the second station (23), and that the mobile device (22) reestablishes the connection to the first station (20) after transferring the data to the second station (23).

4. The system according to claim 1 or any of the further previous claims, **characterized in that** the mobile device (22) transmits the data via the second station (23) to a computer connected to the network (24), in particular to a web server (25) .

5. The system according to claim 1 or any of the further previous claims, **characterized in that** the wireless network (21) of the first station (20) is a WLAN.

6. The system according to claim 1 or any of the further previous claims, **characterized in that** the wireless network (24) of the second station (23) is a WLAN.

7. The system according to claim 1 or any of the further previous claims, **characterized in that** the mobile device (22) is WLAN-capable, in particular a mobile telephone with a WLAN module.

8. The system according to claim 1 or any of the further previous claims, **characterized in that** the mobile device (22) is a smartphone, with an app for controlling the system or individual steps within the system.

9. The system according to claim 1 or any of the further previous claims, **characterized in that** the vehicle (19) is a trailer vehicle or a trailer vehicle with an electronic brake system.

10. The system according to claim 1 or any of the further previous claims, **characterized in that** the first station (20) is a WLAN module, which is connected to an electronic system or an electronic control unit of the vehicle (19).

11. A method for transferring data from a first wireless network (21) of a vehicle (19) to a second wireless network (24) by means of a mobile device (22), wherein access data for the two wireless networks (21, 24) are contained in the mobile device (22), comprising the following steps:
a) the mobile device (22) is connected to the first wireless network (21) of the vehicle (19) and checks whether further networks are available,
b) only after the detection of the second wireless network (24) the mobile device (22) retrieves the data from the vehicle (19) via the first wireless network (21), connects to the second wireless network (24) and transmits the data to the second network (24).

12. The method according to claim 11, **characterized in that** the mobile device (22) disconnects from the first network (21) prior to connecting to the second network (24), and that the mobile device (22) reconnects to the first network (21) after exiting the second network (24).

13. The method according to claim 11 or 12, **characterized in that** after the lapsing of a defined period of time and as long as a connection to the second network (24) exists or is possible, Step b) from claim 11 is repeated.

14. The method according to claim 11 or any of the further previous claims, **characterized in that** the wireless network (21) of the first station (20) is a WLAN.

15. The method according to any of claims 11 to 14, **characterized in that** the wireless network (24) of the second station (23) is a WLAN.

16. The method according to any of claims 11 to 15, **characterized in that** the mobile device (22) is WLAN-capable or a mobile telephone with a WLAN module.

17. The method according to any of claims 11 to 16, **characterized in that** the mobile device (22) is a smartphone, with an app for controlling the method or individual steps within the method.

18. The method according to any of claims 11 to 17, **characterized in that** the vehicle (19) is a trailer vehicle or a trailer vehicle with an electronic braking system.

19. A computer program, a computer program product or app for carrying out the method according to any of claims 11 to 18.

## Revendications

1. Système pour l'envoi de données à partir d'un réseau sans fil d'un véhicule (19), avec une première station (20) pour couvrir un premier réseau sans fil (21) sécurisé par chiffrement, une deuxième station (23) pour couvrir un deuxième réseau sans fil (24) et un appareil mobile (22) pour la connexion aux réseaux sans fil (21, 24), dans lequel la première station (20) est prévue dans le véhicule (19),
dans lequel des données d'accès pour la connexion aux deux réseaux sans fil (21, 24) sont présentes dans l'appareil mobile (22),
et dans lequel des données sont présentes dans le véhicule (19), lesquelles sont transmises de la première station (20) à l'appareil mobile (22) et de là à la deuxième station (23), **caractérisé en ce que** l'appareil mobile (22) identifie la deuxième station (23) avec le réseau sans fil (24) et ce n'est qu'ensuite que les données sont transmises à partir du véhicule (19) par l'intermédiaire de la première station (20) à l'appareil mobile (22) et de là à la deuxième station (23).

2. Système selon la revendication 1, **caractérisé en ce que** l'appareil mobile (22) transmet les données par l'intermédiaire de la deuxième station (23) à un ordinateur connecté au réseau (24).

3. Système selon la revendication 1 ou 2, **caractérisé en ce que** l'appareil mobile (22) est connecté au réseau (21) de la première station (20), que l'appareil mobile (22), après l'identification du réseau (24) de la deuxième station (23) et avant la connexion au réseau (24) de la deuxième station (23), rompt la connexion à la première station (20), et que l'appareil mobile (22), après la transmission des données à la deuxième station (23), rétablit la connexion à la première station (20).

4. Système selon la revendication 1 ou l'une des autres revendications précédentes, **caractérisé en ce que** l'appareil mobile (22) transmet les données à un ordinateur connecté au réseau (24), à savoir à un serveur Web (25), par l'intermédiaire de la deuxième station (23).

5. Système selon la revendication 1 ou l'une des autres revendications précédentes, **caractérisé en ce que** le réseau sans fil (21) de la première station (20) est un WLAN.

6. Système selon la revendication 1 ou l'une des autres revendications précédentes, **caractérisé en ce que** le réseau sans fil (24) de la deuxième station (23) est un WLAN.

7. Système selon la revendication 1 ou l'une des autres revendications précédentes, **caractérisé en ce que** l'appareil mobile (22) est compatible WLAN, en particulier un téléphone mobile avec module WLAN.

8. Système selon la revendication 1 ou l'une des autres revendications précédentes, **caractérisé en ce que** l'appareil mobile (22) est un smartphone, avec application pour commander le système ou des étapes individuelles à l'intérieur du système.

9. Système selon la revendication 1 ou l'une des autres revendications précédentes, **caractérisé en ce que** le véhicule (19) est un véhicule tracté ou un véhicule tracté avec système de freinage électronique.

10. Système selon la revendication 1 ou l'une des autres revendications précédentes, **caractérisé en ce que** la première station (20) est un module WLAN, lequel est connecté à un système électronique ou un appareil de commande électronique du véhicule (19).

11. Procédé pour envoyer des données à partir d'un premier réseau sans fil (21) d'un véhicule (19) à un deuxième réseau sans fil (24) au moyen d'un appareil mobile (22), dans lequel des données d'accès pour les deux réseaux sans fil (21, 24) sont présentes dans l'appareil mobile (22), avec les étapes suivantes :
a) l'appareil mobile (22) est connecté au premier réseau sans fil (21) du véhicule (19) et vérifie si d'autres réseaux connus sont présents,
b) ce n'est qu'après l'identification du deuxième réseau sans fil (24) que l'appareil mobile (22) interroge les données provenant du véhicule (19) par l'intermédiaire du premier réseau sans fil (21), se connecte au deuxième réseau sans fil (24) et envoie les données au deuxième réseau sans fil (24).

12. Procédé selon la revendication 11, **caractérisé en ce que** l'appareil mobile (22), avant la connexion au deuxième réseau (24), se sépare du premier réseau (21), et que l'appareil mobile (22), après avoir quitté le deuxième réseau (24), se reconnecte au premier réseau (21).

13. Procédé selon la revendication 11 ou 12, **caractérisé en ce que**, après expiration d'un laps de temps défini et tant qu'une connexion au deuxième réseau (24) est présente ou possible, l'étape b) de la revendication 11 est répétée.

14. Procédé selon la revendication 11 ou l'une des autres revendications précédentes, **caractérisé en ce que** le réseau sans fil (21) de la première station (20) est un WLAN.

15. Procédé selon l'une quelconque des revendications 11 à 14, **caractérisé en ce que** le réseau sans fil (24) de la deuxième station (23) est un WLAN.

16. Procédé selon l'une quelconque des revendications 11 à 15, **caractérisé en ce que** l'appareil mobile (22) est compatible WLAN ou un téléphone mobile avec module WLAN.

17. Procédé selon l'une quelconque des revendications 11 à 16, **caractérisé en ce que** l'appareil mobile (22) est un smartphone, avec une application pour commander le procédé ou des étapes individuelles à l'intérieur du procédé.

18. Procédé selon l'une quelconque des revendications 11 à 17, **caractérisé en ce que** le véhicule (19) est un véhicule tracté ou un véhicule tracté avec système de freinage électronique.

19. Programme informatique, produit-programme informatique ou application pour mettre en œuvre le procédé selon l'une quelconque des revendications 11 à 18.
